(19) Europäisches Patentamt
European Patent Office
Office européen des brevets

(11) **EP 2 287 120 A1**

(12) **EUROPEAN PATENT APPLICATION**

(43) Date of publication:
**23.02.2011 Bulletin 2011/08**

(51) Int Cl.:
*C03C 3/087* (2006.01)   *C03C 15/00* (2006.01)
*C03C 17/23* (2006.01)   *C03C 17/245* (2006.01)
*C03C 17/34* (2006.01)   *C03C 19/00* (2006.01)

(21) Application number: **09165663.7**

(22) Date of filing: **16.07.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **AGC Glass Europe
1170 Bruxelles (Watermael-Boitsfort) (BE)**

(72) Inventors:
• **Deneil, Christine
6040, Jumet (BE)**

• **Dusoulier, Laurent
6040, Jumet (BE)**
• **Debouny, Claire
6040, Jumet (BE)**

(74) Representative: **Verbrugge, Vivien François
Emeric et al
AGC Glass Europe
Intellectual Property Department
R&D Centre
Rue de l'Aurore, 2
6040 Jumet (BE)**

(54) **Decorative glass article**

(57)    The invention concerns an article comprising a matted glass sheet covered by an inorganic layer which comprises at least one metallic oxide. The article of the invention, which may be used for decorative and/or privacy purposes, is translucent and has a pleasant whitish tint. Contrary to known decorative products with a similar aesthetical aspect, the article of the invention could be thermally tempered and displays improved chemical and mechanical resistance properties.

FIG.1

**Description**

1. Field of the Invention

The invention relates to an article comprising a matted glass sheet, which is translucent and has a particular aesthetical aspect. The glass sheet of the invention may be used for decorative and/or privacy purposes.

2. Description of the Related Art

In the field of decorative applications, matted glass sheets are known for a long time. By matted glass sheet, it is intended a glass which is translucent but diffuses light and has a frosted satin-like appearance. Such type of glass sheet could be obtained by removing some quantity of glass material at the top of its surface, giving a specific texture and roughness to that surface. It is mainly used for decorative and/or privacy purposes in both residential and commercial settings (doors, tables, shelves, shower screens, furniture, wall panelling,...). The main known processes to obtain matted glass sheets are chemical etching (controlled chemical attack with acid or base) and sandblasting (mechanical attack). Matted glass sheet which is treated on one or both faces are known. The treatment of both faces of a glass sheet allows reaching a higher degree of privacy compared to the treatment of only one face. Coloured matted glass sheets are also known when matting a glass sheet which is coloured in the bulk.

Matted glass sheets may be provided as safety articles as they can be laminated or they can be tempered in order to increase strength and reduce likelihood of injury in the event of breakage. Nevertheless, matted glass sheets show, just as the glass sheets from which they originate, a poor chemical durability and thus rapidly give raise to iridescence phenomenon when exposed to moisture.

In the same field, it is also known a glass sheet coated on one side with a satin-finish paint which mimics the translucent appearance of matted glass. Such a product, like the Lacomat® product commercialized by AGC Flat Glass Company, provides more privacy than acid-etched or sandblasting glass, coming from a higher diffusion of light. Moreover, due to the presence of the paint layer, it could also have a colour tint if the paint comprises pigments. For example, an aesthetically pleasing flat glass product is known with a whitish tint (Lacomat® White). Nevertheless, this painted glass sheet has several disadvantages: (i) it cannot be thermally tempered once coated because the paint would not resist to the heat-treatment required for tempering, (ii) it cannot be laminated and (iii) it offers an acceptable mechanical durability and resistance to scratches only for the face opposite to that bearing the paint. Moreover, it is known that such a whitish tint could not be obtained with a simply matted glass, by, for example, modifying or adapting (i) the composition of attack solution or (ii) the conditions of this attack (time, temperature,...).

Finally, it is also known a glass sheet which is acid-etched on one side and painted with an opacifying coating on the other side (Matelac® commercialized by AGC Flat Glass Company). This product is however an opaque glazing even if it may provide, when looking from the acid-etched face, an aesthetically pleasing colour combined with a satin look due to acid-etching.

3. Objectives of the Invention

The invention aims to solve the disadvantages of known products described above. More particularly, an objective of the present invention is to provide a translucent glass article which shows a pleasant whitish aesthetical aspect, similar to that of the Lacomat® White and which could be thermally tempered, together with improved resistance properties compared to those of known decorative glass products.

Another objective of the present invention is to provide a solution to the disadvantages of known products which is simple and cost effective.

4. Summary of the Invention

According to a particular embodiment, the invention concerns a glass article comprising at least one glass sheet which comprises a matted surface and an inorganic layer which covers the matted surface and which comprises at least one metallic oxide.

According to the invention, the combination of a matted surface and an inorganic layer provides a glass product with several advantages compared to prior art. The inventors have surprisingly found that an inorganic layer comprising at least one metallic oxide and which is commonly used to produce high reflection glazings may provide, when deposited on a matted surface, a glass article which is translucent and which shows a pleasant whitish tint. Moreover, a glass article according to the invention shows improved chemical and mechanical resistance properties compared to those of known products. Finally, such an article may furthermore be thermally tempered.

5. Brief Decription of the Drawings

Other characteristics and advantages of the invention will more clearly appear with the reading of the following description of at least one preferred embodiment, given as simple illustrative and non restrictive example, and annexed drawings among which:

figure 1 is an enlarged, cross-sectional view of an article according to the invention,

figure 2 is a variation of the embodiment of figure 1.

6. Description of at least one embodiment of the Invention

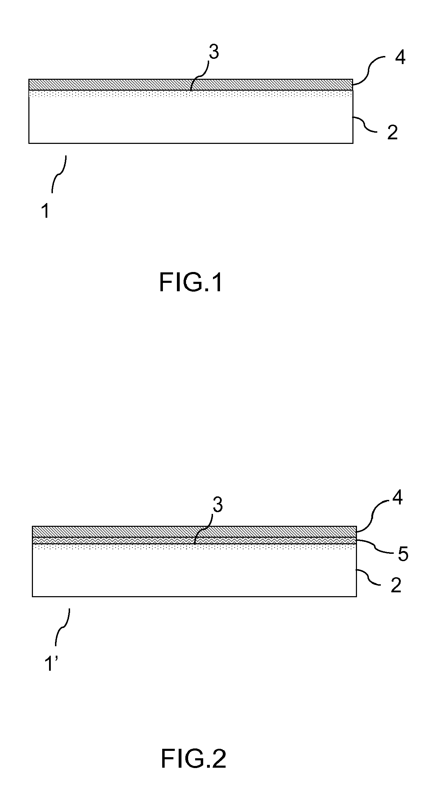

As illustrated in Figure 1, the article (1) according to the invention comprises at least one glass sheet (2) comprising a matted surface (3) and an inorganic layer (4) which covers at least partially the matted surface (3).

The glass sheet (2) may be made of soda-lime glass. By soda-lime glass, it is meant a glass having the following composition, expressed in percentages by weight:

| | |
|---|---|
| $SiO_2$ | 60 to 75%, |
| $Na_2O$ | 10 to 20%, |
| CaO | 0 to 16%, |
| $K_2O$ | 0 to 10%, |
| MgO | 0 to 10%, |
| $Al_2O_3$ | 0 to 5%, |
| BaO | 0 to 2%, with both further conditions: |

alkaline-earth oxides (BaO + CaO + MgO) totalising from 10 to 20%,
alkaline oxides ($Na_2O$ + $K_2O$) totalising from 10 to 20%.

Minor additives may as well be present in very small proportions in the glass composition, like redox components ($NaNO_3$, $Na_2SO_4$, coke, ...), for example.

The glass sheet (2) according to the invention may be a float glass. It may have a thickness of from 0.5 to 15 mm. The glass sheet may be made of clear or extra-clear glass. By extra-clear glass, it is intended a glass which comprises a total amount of iron, expressed as $Fe_2O_3$, lower than about 0.04 weight % and particularly, lower than 0.02 weight %. By clear glass, it is intended a glass which comprises a total amount of iron, expressed as $Fe_2O_3$, which may vary from about 0.04 to about 0.4 weight %.

The glass sheet (2) of the article (1) comprises a matted surface (3). By matted surface, it is intended a surface for which some quantity of glass material has been removed, giving a specific texture and roughness to that surface, decreasing light transmitted by the glass. A proportion of the light transmitted through such a matted surface will also be diffused resulting in reduced spectral reflection.

The matted surface (3) according to the invention may be produced by any known method. The matted surface (3) according to the invention is preferably (i) an acid-etched surface obtained by a controlled chemical attack with acid, (ii) a base-etched surface obtained by a controlled chemical attack with base, or (iii) a sandblasted surface obtained by a mechanical attack. Acid-etched matted surface according to the invention may be produced conventionally by means of a controlled chemical attack with an aqueous solution of hydrofluoric acid. The acid attack may be made in one or several steps. Generally, attack aqueous solutions of hydrofluoric acid have a pH of from 0 to 5, and they may comprise, in addition to hydrofluoric acid itself, salts of that acid, other acids like HCl, $H_2SO_4$, $HNO_3$, acetic acid, phosphoric acids and their salts (e.g. $Na_2SO_4$, $K_2SO_4$, $(NH_4)_2SO_4$, $BaSO_4$, ...) and optional adjuvants in minor proportions (e.g. acid/base buffer compounds, or compounds facilitating spreading of the solution, ...). Alkaline salts and ammonium salts are generally preferred, like sodium, potassium and ammonium hydrofluoride and/or bifluoride. Base-etched matted surface according to the invention may be produced conventionally by means of a controlled attack with an alcohol-water solution of an alkali (LiOH, NaOH or KOH) at high temperature (300°C or above). The basic attack may be made in one or several steps. Generally, attack basic solutions have a pH higher than 9 or, preferably, higher than 10. Sandblasted matted surface according to the invention may be conventionally obtained by blasting at high speed an abrasive grain material on the said surface.

Such matting treatments produce a matted surface with a degree of surface roughness resulting from the creation of irregularities on the surface.

The glass sheet (2) of the article (1) further comprises an inorganic layer (4) which covers at least partially the matted surface (3) and which comprises at least one metallic oxide.

The at least one metallic oxide according to the invention may be a metallic oxide of elements selected from the group consisting in titanium, zirconium, vanadium, niobium, tantalum, aluminium and zinc. The inorganic layer (4) may also comprise mixtures of two or more metallic oxides from this group, in various proportions. The use of these particular oxides in the invention allows reaching a better aesthetical aspect, in particular a better whitish tint. Advantageously, the inorganic layer (4) comprises titanium oxide. The use of titanium oxide is particularly advantageous as it allows obtaining the most satisfactory aesthetical results. And, more advantageously, the inorganic layer (4) further comprises zirconium oxide. The association of titanium oxide and zirconium oxide in the inorganic layer (4) according to the invention allows reaching the desired whitish tint while improving the resistance of the article.

Additionally, the inorganic layer (4) may further comprise other components, aiming to improve particular properties of the inorganic layer like its resistance or its optical properties. Non-limiting examples of such components are hafnium, manganese, iron, cobalt, nickel, copper or silicon oxides.

The thickness of the inorganic layer may influence the optical properties of the article of the invention and in particular, its total light transmission and colour. Advantageously, the inorganic layer (4) according to the invention has a thickness of from 200 to 1500 Å.

The inorganic layer (4) according to the invention may be deposited by any known method in the art. Non-limiting examples of deposition process for the inorganic layer (4) are pyrolysis, chemical vapor deposition and magnetron sputtering.

The surface roughness of the article (1) may be characterized by the Rz and RSm parameters and the relation between both parameters Rz/RSm. Rz and RSm are typical measures of surface roughness (expressed in μm). All roughness measurements herein were obtained with a Taylor-Hobson Form Talysurf apparatus, in roughness mode. The samples have been measured with the following parameters:

| | |
|---|---|
| Shape: | LS line |
| Filter type: | 2CR-PC |
| Sample length: | 20 mm |
| Cut-off: | "use the whole selected data length" |
| Short range filter: | 0.008 mm |
| Long range filter: | 0.8 mm |

Rz (also called Rtm) is the average of all of the values Rz1, Rz2 .... etc. over the entire profile (Rzl is the greatest difference in altitude between the highest peak and the lowest valley over the first cut-off portion of the sample, Rz2 is the greatest difference in altitude between the highest peak and the lowest valley over the second cut-off portion of the sample, and so on for Rz3, Rz4,...). RSm (also called Sm) is the average of the distance between each time the profile crosses the average line; it represents an indication of the average distance between the main peaks (resulting from irregularities) of the profile. The short range filter and long range filter, as commonly used in the art of measuring surface roughness, are used to separate a characteristic measurement of surface roughness from an overall "waviness" of the sample and from very short wavelength effects.

The article (1) according to the invention has a surface roughness defined by a Rz value greater than 1 μm and less than 20 μm, and a Rz/RSm ratio greater than 0.10 and less than 0.23. Preferably, the article (1) has a surface roughness defined by a Rz greater than 9 μm and less than 18 μm, and a Rz/RSm ratio greater than 0.12 and less than 0.16.

The article (1) according to the invention is translucent but diffuses the transmitted light resulting in a frosted satin-like appearance. The article (1) according to the invention further displays a pleasant whitish tint which is similar to that of known Lacomat® White product.

The optical properties of the article (1) according to the invention are characterized by the total light transmission, the haze and clarity values (characterizing diffusion of transmitted light) and the CIELab values: L*, a* and b* (characterizing colour aspect of the article). The optical properties of the article (1) are considered in the present invention from the matted and/or coated side of said article.

The total light transmission with illuminant D (TLD) in the following description is considered for a thickness of 4 mm (TLD4) at a solid angle of observation of 2°. The light transmission represents the percentage of light flux emitted between wavelengths 380 nm and 780 nm which is transmitted through the article. It is desirable that the article according to the invention has a TLD4 of less than 80%.

CIE L*a*b* parameters are considered in the following description in reflection and with the following measurement parameters: illuminant D, 10°, SCI, white tile as background. It is desirable that the article (1) according to the invention has a L* value higher than 35 when measured from the coated surface. Preferably, the article according to the invention has a L* value higher than 50 when measured from the coated surface.

Advantageously, if it is desired to enhance its resistance to breakage, the article (1) of the invention may be chemically or thermally tempered without impairing its optical properties.

Additional layers may also be introduced above or below the inorganic layer (4), if desired, without departing from the invention. In particular, an underlayer (5) comprising one or more metallic oxides may be interposed between the matted surface (3) and the inorganic layer (4), as illustrated in the embodiment of Figure 2. Such an underlayer (5) may, for example, be used to prevent diffusion phenomena of ions from the glass sheet to the inorganic layer (4) which could modify optical properties of the article. For example, an underlayer, which may be used for such a goal, comprises tin oxide.

The invention is not limited to the described embodiments but also covers combinations of embodiments and/or alternatives.

The invention will now be illustrated below by examples aiming at better describing the invention, without by no means trying to limit its scope. Example 1 is a comparative example corresponding to a matted glass sheet while Examples 2 and 3 are in accordance with the invention.

Example 1 (comparative example, non-compliant to the invention)

A sheet of clear glass, 4 mm in thickness and of a surface of 0.12 $m^2$ (0.4 m x 0.3 m), has been cleaned with an aqueous detergent and carefully rinsed with water and then dried. The sheet has then been acid-etched in a known manner: an acidic attack solution composed of 17 ml 40% HF, 10 g $Na_2CO_3$, 17 ml glacial acetic acid and 66 ml water at 25°C has been drawn onto the glass sheet and the attack has been allowed to take place for 8 minutes. The attack acid solution has further been rinsed with water and a final cleaning of the glass sheet with an aqueous detergent solution has been performed.

Example 2 (compliant to the invention)

A sheet of clear glass, 4 mm in thickness and of a surface of 0.12 $m^2$ (0.4 m x 0.3 m) has been cleaned with an aqueous detergent and carefully rinsed with water and then dried. The sheet has then been acid-etched in a known manner: an acidic attack solution composed of 17 ml 40% HF, 10 g $Na_2CO_3$, 17 ml acetic acid glacial and 66 ml water at 25°C has been drawn onto the glass sheet and the attack has been allowed to take place for 8 minutes. The attack acid solution has further been rinsed with water and a final cleaning of the glass sheet with an aqueous detergent solution has been performed. An underlayer of tin oxide has first been deposited by the sputtering technique assisted by magnetron on the so-obtained acid-etched surface: a metallic target of tin has been sputtered in oxidizing atmosphere. Thickness of the obtained tin oxide underlayer is approximately 200 Å. The inorganic layer has then been deposited also by the sputtering technique assisted by magnetron with a target constituted of titanium and zirconium oxides in similar weight amount, in a weak oxidizing atmosphere. Thickness of the inorganic layer comprising titanium oxide and zirconium oxide in similar amount is approximately 300Å.

The roughness of the article has been measured by a Taylor-Hobson Talysurf analysis of surface roughness, as commonly used for analysing surface roughness. The analysis consists of arranging a fine stylus having a calibrated point in contact with the surface to be analysed and slowly displacing the stylus across the surface so as to record all variations in the altitude of the surface. The parameters cited above have been used to carry out this analysis. The following results have been obtained for this article:

$$Rz = 9.7 \, \mu m$$

$$RSm = 68.0 \, \mu m$$

$$Rz/RSm = 0.14$$

Example 3 (compliant to the invention)

The article from Example 2 has been thermally tempered in a classical manner: it has been heated up to 670°C during 195 seconds and then rapidly cooled with air blower.

The optical properties of Lacomat White® (4mm in thickness), comparative Example 1, Examples 2 and 3 compliant with the invention have been determined by measuring the total light transmission, the haze and clarity values and the CIELab values: L\*, a\* and b\*. These optical properties have been measured from the matted and/or coated side of each article. The total light transmission has been measured for a thickness of 4 mm and with illuminant D (TLD4), as defined by the Commission Internationale de l'Eclairage (CIE), at a solid angle of observation of 2°. The standard ASTM O 1003-61 defines the haze as the percentage of transmitted light, which, while passing through the sample, deviates from the incident beam by an angle of more than 2.5° (also called wide-angle scattering). Clarity, also called narrow-angle scattering, defines the percentage of transmitted light, which, while passing through the sample, deviates from the incident beam by an angle of less than 2.5°. CIE L\*a\*b\* parameters have been measured in reflection with a MINOLTA CM-2600d apparatus, with the following measurement parameters: illuminant D, 10°, SCI, white tile as background.

The articles from Examples 2 and 3, in accordance with the invention, have the following optical properties which may be compared to comparative Example 1 and the known Lacomat White® product:

| | Lacomat White® [a] | Example 1 (comparative) [b] | Example 2 [a] | Example 3 [a] |
|---|---|---|---|---|
| **TLD4 (%)** | 50.5 | 85.5 | 70.0 | 70.9 |
| **Haze (%)** | 99.3 | 98.6 | 96.2 | 97.1 |
| **Clarity (%)** | 7.0 | 5.4 | 6.5 | 6.2 |
| **L\* ref.** | 52.8 | 33.6 | 53.9 | 53.6 |
| **a\* ref.** | -2.1 | -0.4 | -1.6 | -1.8 |
| **b\* ref.** | -3.1 | -0.7 | -6.5 | -6.8 |
| [a] measurement from the coated side [b] measurement from the matted side | | | | |

Comparison of the known Lacomat White® and Example 2 compliant to the invention leads to the conclusion that the colorimetric data L\*, a\* and b\* of both articles are really close. In particular, the $\Delta E^*$ value, defining by the CIE as $(\Delta L^{*2}+\Delta a^{*2}+\Delta b^{*2})^{\frac{1}{2}}$ and representing the "distance" between two "colors" reaches 3.9. This value is relatively low and therefore translates the fact that both articles are similar in term of color. This $\Delta E^*$ value reaches 21.2 while comparing Example 2 and Comparative Example 1.

While comparing Example 2 and Example 3, which is the article from Example 2 which has been thermally tempered, once may notice that the thermal treatment carried out in Example 3 has not impaired the optical properties of the original article from Example 2. These properties are not modified significantly by tempering and in particular, the color is not affected by such a treatment (the $\Delta E^*$ value is close to zero).

The article according to Example 1, Example 2 and the known product Lacomat White® have also been subjected to a series of tests, as described below, aiming at evidencing their chemical (tests 1, 2 and 3) and mechanical (test 4) durability.

**Test 1** (Condensation resistance test, EN 1096-2) - This test consists in subjecting a sample to a water-saturated atmosphere at constant temperature. The sample has condensation continually forming on it and it is this condensation that may cause degradation. Full details of this test are set out in the European Standard EN 1096-2. The articles have been subjected to the test during 15 days.

**Test 2** (Climatic chamber test) - This test consists in subjecting a sample in an atmosphere maintained at 98% relative humidity to a continuous cycle of a) increasing temperature from 45 °C to 55 °C over the space of one hour and b) subsequently decreasing the temperature from 55 °C to 45°C over the space of one hour. Full details of this test are set out in the standard DIN50 017. The articles have been subjected to the test during 21 days.

**Test 3** (Neutral salt spray test, EN 1096-2) - This test consists in subjecting a sample to neutral, water saline atmosphere at constant temperature. It is the water saline spray that may cause surface degradation. The neutral salt solution is composed of NaCl in water. Full details of this test are set out in the European Standard EN 1096-2. The articles have been subjected to the test during 15 days.

**Test 4** (Abrasion sand test) - The tester is constituted by a cylindrical weight of 1050 +/- 50 g. with a felt (external diameter 6 cm, internal diameter 1.5 cm) stuck at this bottom. In the middle of the tester, there is a hole for the introduction of an abrasive solution composed of 1 liter demineralized water and 160 grammes of sand (500 mesh). The tester is moved on the sample in a backwards and forwards motion during 30 minutes (600 cycles). The test has been carried out on the coated and/or matted face of the article.

The following results have been obtained for each implemented test:

| Test | Lacomat White® | Example 1 (comparative) | Example 2 |
|---|---|---|---|
| 1- Cleveland | -- | No alteration of the article | No alteration of the article |
| 2 - Climatic chamber | -- | iridescence phenomenon after 10 days | No alteration of the article the article |
| 3 - Neutral salt spray test - | No alteration of the article | No alteration of the article | No alteration of the article |
| 4 - Abrasion sand test | Several visible scratches in the paint layer the matted | No alteration of the matted face | Very few visible scratches in the face inorganic layer |

The resistance tests carried out for the articles of Example 1, Example 2 and the known product Lacomat White® reveal that the article compliant to the invention (Example 2) has a slightly improved mechanical durability compared to the paint coated Lacomat White® and an improved chemical durability compared to a simply matted glass sheet (Example 1).

**Claims**

1. Article (1) comprising at least one glass sheet (2), **characterized in that** the at least one glass sheet (2) comprises:

   - a matted surface (3), and
   - an inorganic layer (4) which covers at least partially the matted surface (3) and which comprises at least one metallic oxide.

2. Article according to claim 1, **characterized in that** said matted surface (3) is an acid-etched, a base-etched surface or a sandblasted surface.

3. Article according to any of preceding claims, **characterized in that** the inorganic layer (4) comprises at least one metallic oxide of elements selected from the group consisting in titanium, zirconium, vanadium, niobium, tantalum, aluminium, zinc and mixtures thereof.

4. Article according to preceding claim, **characterized in that** the inorganic layer (4) comprises titanium oxide.

5. Article according to preceding claim, **characterized in that** the inorganic layer (4) further comprises zirconium oxide.

6. Article according to any of preceding claims, **characterized in that** the inorganic layer (4) has a thickness of from 200 to 1500 Å.

7. Article according to any of the preceding claims, **characterized in that** said article has a surface roughness defined by:

   - Rz greater than 1 $\mu$m and less than 20 $\mu$m, and
   - Rz/RSm ratio greater than 0.10 and less than 0.23,

   when measured over a sample length of 20 mm with a cut-off using the whole selected data length, a short range filter of 0.008 mm and a long range filter of 0.8 mm.

8. Article according to preceding claim, **characterized in that** said article has a surface roughness defined by:

   - Rz greater than 9 $\mu$m and less than 18 $\mu$m, and
   - Rz/RSm ratio greater than 0.12 and less than 0.16.

9. Article according to any of the preceding claims, **characterised in that** it has a total light transmission TLD4 of less than 80%.

10. Article according to any of the preceding claims, **characterised in that** it has a L* value higher than 35 when measured from the coated surface.

11. Article according to preceding claim, **characterised in that** it has a L* value higher than 50 when measured from the coated surface.

12. Article (1') according to any of preceding claims, **characterized in that** said article further comprises an underlayer (5) comprising one or more metallic oxides and interposed between said matted surface (3) and said inorganic layer (4).

13. Article according to preceding claim, **characterized in that** the underlayer (5) comprises tin oxide.

FIG.1

FIG.2

Europäisches
Patentamt
European
Patent Office
Office européen
des brevets

# EUROPEAN SEARCH REPORT

Application Number

EP 09 16 5663

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 854 888 A1 (AVICE ATELIERS [FR]) 19 November 2004 (2004-11-19) | 1-2 | INV. C03C3/087 |
| Y | * the whole document * | 7-11 | C03C15/00 |
| A | | 3-5, 12-13 | C03C17/23 C03C17/245 C03C17/34 C03C19/00 |
| X | DE 10 2005 030077 A1 (SCHOTT AG [DE]) 11 January 2007 (2007-01-11) | 1-4,12 | |
| Y | * paragraph [0030] - paragraph [0047] * | 7-11 | |
| X | CN 1 962 511 A (UNIV ZHEJIANG [CN]) 16 May 2007 (2007-05-16) * abstract * | 1,3-4 | |
| X | DE 38 17 240 A1 (CRISTALUX KIRCHBERGER GLAS GMB [DE]) 23 November 1989 (1989-11-23) * column 2, line 45 - line 49 * * column 5, line 31 - line 52 * | 1-5 | |
| X | GB 2 188 924 A (GLAVERBEL GLAVERBEL [BE]) 14 October 1987 (1987-10-14) * example 5 * | 1-2, 12-13 | TECHNICAL FIELDS SEARCHED (IPC) C03C |
| Y | WO 2008/046877 A2 (AGC FLAT GLASS EUROPE SA [BE]; PILLOY GEORGES [BE]; HENNEBICHLER PETR) 24 April 2008 (2008-04-24) * example * | 7-11 | |

The present search report has been drawn up for all claims

| Place of search | Date of completion of the search | Examiner |
|---|---|---|
| Munich | 30 October 2009 | Somann, Karsten |

## ANNEX TO THE EUROPEAN SEARCH REPORT
## ON EUROPEAN PATENT APPLICATION NO.

EP 09 16 5663

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2009

| Patent document cited in search report | | Publication date | Patent family member(s) | | Publication date |
|---|---|---|---|---|---|
| FR 2854888 | A1 | 19-11-2004 | NONE | | |
| DE 102005030077 | A1 | 11-01-2007 | SG | 128638 A1 | 30-01-2007 |
| CN 1962511 | A | 16-05-2007 | NONE | | |
| DE 3817240 | A1 | 23-11-1989 | NONE | | |
| GB 2188924 | A | 14-10-1987 | BE | 1001108 A4 | 18-07-1989 |
| | | | CH | 672120 A5 | 31-10-1989 |
| | | | DE | 3711748 A1 | 22-10-1987 |
| | | | ES | 2004915 A6 | 16-02-1989 |
| | | | FR | 2596753 A1 | 09-10-1987 |
| | | | IT | 1217152 B | 14-03-1990 |
| | | | JP | 1117372 A | 10-05-1989 |
| | | | LU | 86837 A1 | 07-12-1987 |
| | | | NL | 8700764 A | 02-11-1987 |
| | | | US | 4880677 A | 14-11-1989 |
| WO 2008046877 | A2 | 24-04-2008 | EP | 2074072 A2 | 01-07-2009 |

EPO FORM P0459

For more details about this annex : see Official Journal of the European Patent Office, No. 12/82